(19) Europäisches Patentamt
European Patent Office
Office européen des brevets

(11) Veröffentlichungsnummer : **0 395 967 B1**

(12) **EUROPÄISCHE PATENTSCHRIFT**

(45) Veröffentlichungstag der Patentschrift :
**08.09.93 Patentblatt 93/36**

(51) Int. Cl.$^5$ : **C08L 77/00,** // (C08L77/00, 81:04)

(21) Anmeldenummer : **90107591.1**

(22) Anmeldetag : **21.04.90**

(54) **Feinverteilte Polyarylensulfide enthaltende Polyamidformmassen.**

Die Akte enthält technische Angaben, die nach dem Eingang der Anmeldung eingereicht wurden und die nicht in dieser Patentschrift enthalten sind.

(30) Priorität : **04.05.89 DE 3914715**

(43) Veröffentlichungstag der Anmeldung :
**07.11.90 Patentblatt 90/45**

(45) Bekanntmachung des Hinweises auf die Patenterteilung :
**08.09.93 Patentblatt 93/36**

(84) Benannte Vertragsstaaten :
**BE CH DE ES FR GB IT LI NL**

(56) Entgegenhaltungen :
**WO-A-88/02763**
**US-A- 4 292 416**

(73) Patentinhaber : **BAYER AG**
**D-51368 Leverkusen (DE)**

(72) Erfinder : **Nielinger, Werner, Dr.**
**Bärenstrasse 21**
**D-4150 Krefeld 1 (DE)**
Erfinder : **Idel, Karsten-Josef, Dr.**
**Am Schwarzkamp 38**
**D-4150 Krefeld 1 (DE)**
Erfinder : **Westeppe, Uwe, Dr.**
**Vogelskamp 72**
**D-4020 Mettmann (DE)**
Erfinder : **Freitag, Dieter, Dr.**
**Hasenheide 10**
**D-4150 Krefeld 1 (DE)**
Erfinder : **Wulff, Claus, Dr.**
**Richard-Strauss-Strasse 21**
**D-4150 Krefeld (DE)**
Erfinder : **Heinz, Hans-Detlef, Dr.**
**Breslauer Strasse 31**
**D-4150 Krefeld 11 (DE)**

EP 0 395 967 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Polyamidformmassen mit einem Gehalt von 0,1 bis 40 Gew.-% eines Polyarylensulfids durch Umsetzung polyamidbildender Komponenten in Gegenwart von Polyarylensulfiden.

Polyamide werden aufgrund einer Reihe hervorragender Eigenschaften wie Zähigkeit, Steifigkeit, Abriebfestigkeit und Härte unter anderem zur Herstellung von Formteilen für den technischen Bereich durch Spritzguß oder Extrusion eingesetzt. Um die Verwendungsmöglichkeiten der Polyamide zu erweitern und spezielle Eigenschaften noch zu verbessern, hat man auch Mischungen mit anderen Polymeren hergestellt. So gelingt es beispielsweise, die Zähigkeit bei tiefen Temperaturen und die Flexibilität zu erhöhen, indem man Mischungen auf der Basis von Polyolefinen, Poly(meth)acrylaten oder Polybutadienen zusetzt.

Mischungen von Polyamiden mit anderen Polymeren erreichen aber nur dann optimale Eigenschaftswerte und ein glattes und gleichmäßig ausgebildetes Aussehen der Oberflächen, wenn es gelingt, beispielsweise durch Einbau von Carboxyl-, Anhydrid-, Estergruppen die Verträglichkeit des Polyamids mit dem Modifikator zu verbessern. Dazu ist die Entwicklung spezieller Modifikatoren erforderlich, deren Herstellung aufwendig und kostspielig ist Aber auch bei den Polyamidmischungen mit verbesserter Verträglichkeit liegen häufig manche Eigenschaften unter dem Niveau der Ausgangspolyamide. So haben schlagzäh modifizierte Polyamide eine niedrigere Wärmeformbeständigkeit, einen geringeren Modul und ein schlechteres Fließverhalten.

Mischungen aus Polyamiden (aus Terephthalsäure-verzweigten Diaminen) und 0,01 bis 10,0 Gew.-% Polyarylensulfid sind in der US-Patentschrift 4 292 416, ferner Mischungen aus Polyamid 46 und 5 bis 50 Gew.-% Polyarylensulfid in der Patentanmeldung WO 86/03 212 beschrieben worden. Diese Mischungen werden durch Mischen der Polymeren Polyamid und Polyarylensulfid in der Schmelze nach üblichen Methoden, beispielsweise in einem Extruder, hergestellt. Obwohl in diesen Patentschriften schon einige vorteilhafte Maßnahmen zur Herstellung homogener Blends angeführt werden, nämlich Einsatz des Polyarylensulfids als Pulver, Compoundierung der Komponenten oberhalb der Schmelztemperatur des Polyarylensulfids oder Zugabe des Polyarylensulfids in gelöster Form, ist die Partikelgröße des Polyarylensulfids in den Mischungen schwankend und die Verteilung ungleichmäßig. Daher haben auch die Mischungen aus Polyamid 6 und Polyarylensulfid nach Angaben der Patentanmeldung WO 86/03 212 ein schlechtes Aussehen, geringe Festigkeit und Steifigkeit sowie ein irreguläres Extrusionsverhalten und werden dort durch 4,6-PA ersetzt.

Überraschenderweise wurde nunmehr gefunden, daß man die beschriebenen Nachteile vermeiden kann, wenn man die polyamidbildenden Monomeren unter Zusatz des Polyarylensulfids polymerisiert.

Gegenstand der Erfindung ist also ein Verfahren zur Herstellung von Mischungen aus Polyamiden und Polyarylensulfiden mit einer Teilchengröße des Polyarylensulfids von 0,01 bis 5 µm, vorzugsweise 0,1 bis 4 µm, indem man die polyamidbildenden Monomeren unter Zusatz des Polyarylensulfids polymerisiert.

Geeignete polyamidbildende Monomeren sind Diamine wie Diaminobutan, 1,6-Diaminohexan, 2,2,4- und 2,4,4-Trimethylhexamethylendiamin, 1,4-Diaminocyclohexan, Bis-(aminomethyl)-cyclohexan, Bis-(4-aminocyclohexyl)-methan, Bis-(4-aminocyclohexyl)propan, 3,3'-Dimethyl-4,4'-diamino-dicyclohexylmethan, 3-Aminomethyl-3,3,5-trimethyl-cyclohexylamin, m- oder p-Xylylendiamin, ferner Dicarbonsäuren wie Adipinsäure, Azelainsäure, Sebazinsäure, Decandicarbonsäure, Trimethyladipinsäure, Hexahydroterephthalsäure, Isophthalsäure, Terephthalsäure, ferner Aminocarbonsäuren bzw. ihre Lactame. Selbstverständlich kommen auch Mischungen aus mehreren dieser Ausgangsprodukte in Betracht.

Als Polyarylensulfide kommen Produkte mit gleichen oder verschiedenen Arylensulfideinheiten der Formel (I)

$$-Ar-S \qquad (I),$$

in der

Ar für einen Rest der Formeln (II) bis (IV) steht,

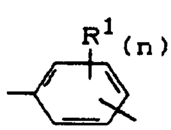

(II),

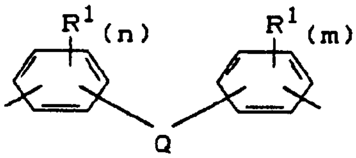

(III),

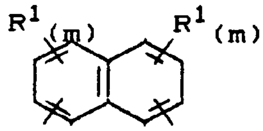

(IV),

in denen

- $R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ unter Einbeziehung der benachbarten C-Atome im Ring zu einem $C_5$-$C_{14}$-aromatischen oder bis zu drei Heteroatome wie N, O, S enthaltenden heterocyclischen Ring verknüpft sein können, und
- Q für eine Einfachbindung oder eine Gruppe wie $-CR^1_2-$, -C(O)-, -S(O)-, $-S(O)_2-$, $-NR^1-$, -C(C)O-, -C(O)$NR^1$-, $(-C(O))_2N-$, -C(O)$NR^1$-Ar- $NR^1$C(O)- und -C(O)-Ar-C(O)-steht, wobei $R^1$ und Ar die obengenannte Bedeutung haben, und
- n für die Zahl 1, 2, 3 oder 4 steht,
- m für die Zahl 1, 2 oder 3 steht, in Betracht.

Die Schmelzviskosität der Polyarylensulfide beträgt 10-150 Pa.s, bevorzugt 15-60 Pa.s, gemessen bei 310°C in einem Hochdruckkapillarviskosimeter bei einer Schergeschwindigkeit von 1000 $s^{-1}$.

Die Herstellung der Mischungen erfolgt durch Polymerisation der polyamidbildenden Monomeren in bekannter Weise unter Zusatz des Polyarylensulfids. Diamine und Dicarbonsäuren werden zweckmäßigerweise als Salze in wäßriger Lösung eingesetzt. Die Lösung wird zunächst bei ca. 200 bis 240°C unter erhöhtem Druck vorkondensiert. Nach dem Entspannen erfolgt die weitere Kondensation unter Atmosphärendruck bei ca. 260 bis 300°C. Lactame, insbesondere ε-Caprolactam, werden entweder hydrolytisch oder anionisch, gegebenenfalls unter Zusatz eines Aktivators, polymerisiert, Bei der anionischen Polymerisation kann auch in Gegenwart von Glasfasern oder Glasmatten polymerisiert werden.

Eine vorteilhafte Ausführung des Verfahrens ist die Herstellung von Mischungen aus Polyamid 6 und einem Polyarylensulfid, wenn man das Polyarylensulfid zunächst bei Temperaturen oberhalb 240°C in ε-Caprolactam löst und diese Lösung hydrolytisch oder anionisch, gegebenenfalls unter Zusatz einem Aktivators, polymerisiert.

Bei der hydrolytischen Polymerisation von größeren Mengen ε-Caprolactam im Autoklaven ist es besonders vorteilhaft, wenn man die Mischung aus ε-Caprolactam und dem Polyarylensulfid zunächst etwa 30 min auf 270-290°C, vorzugsweise auf 275-280°C erhitzt und die Polymerisation nach Abkühlen der Schmelze auf 260-270°C bei dieser Temperatur beendet.

Die erfindungsgemäßen Mischungen können die üblichen Zuschlagstoffe und Hilfsmittel enthalten, beispielsweise Gleit- und Entformungsmittel, Nukleierungsmittel, Flammschutzmittel und weitere Füllstoffe. Als Füllstoffe kommen Mikroglaskugeln, Kreide, Quarze wie Novaculit, ferner Silikate wie Asbest, Feldspat, Glimmer, Talkum sowie Kaolin in calcinierter und nicht calcinierter Form in Betracht. Außerdem sind Farbstoffe und Pigmente zu nennen, ferner Schlagzähmodifikatoren, beispielsweise auf der Basis von Copolymerisaten des Ethylens oder gepfropften Kautschuklatices, beispielsweise auf Polybutadien- oder Poly(meth)acrylat-Basis.

Die Polyamidmischungen zeichnen sich durch eine gute und gleichmäßige Verteilung des Polyarylensulfids in der Polyamidmatrix aus. Der Durchmesser der kugelförmigen Teilchen ist 0,01 bis 5 μm, bevorzugt 0,05 bis 3 μm. Die Struktur-Eigenschaften des Polyamids werden durch das Polyarylensulfid kaum beeinflußt. Zwar nimmt die Zähigkeit ab, die Wärmeformbeständigkeit bleibt auf dem Niveau des Polyamids, während die Steifigkeit sogar noch zunimmt, das Verarbeitungsverhalten (Fließfähigkeit) nimmt zu.

Die erfindungsgemäßen Mischungen können somit z.B, zur Herstellung von technischen Teilen, insbesondere für den Automobilsektor eingesetzt werden.

Beispiel 1

Man löst 30 g Poly-(p-phenylensulfid) bei 250°C unter Stickstoff in 243 g ε-Caprolactam[1] ). Die Lösung wird abgekühlt, und nach Zugabe von 31,3 g ε-Aminocapronsäure polymerisiert man hydrolytisch unter Rühren in einer Stickstoffatmosphäre 2 1/2 Stunden bei 270°C. Die Schmelze wird während der Polymerisation trübe. Man erhält ein beinahe farbloses Produkt, das granuliert und dreimal je acht Stunden mit Wasser von 90°C extrahiert wird.

Die relative Viskosität des Polyamidanteils in der Mischung beträgt 3,1, gemessen an einer einprozentigen Lösung in m-Kresol bei 25°C in einem Ubbelohde-Viskosimeter.

Beispiel 2

Beispiel 1 wird mit den folgenden veränderten Mengenverhältnissen wiederholt:
198 g ε-Caprolactam
75 g Poly-(p-phenylensulfid)
31,3 g ε-Aminocapronsäure, die nach Lösen des Poly-(p-phenylensulfids) zugesetzt werden.
Die relative Viskosität des Polyamidanteils beträgt 2,8.

[1]) Das in diesem und in den folgenden Beispielen eingesetzte Poly-(p-phenylensulfid) hat eine Schmelzviskosität von 42 Pa.s.

**Tabelle 1**

| | | Beispiel 1 | Beispiel 2 | Beispiel 3 | Polyamid 6 (Vergleich) |
|---|---|---|---|---|---|
| Verteilung | | --------sehr gleichmäßig-------- | | | - |
| Teilchengröße | µm | 0,1 - 0,8 | 0,1 - 2 | 0,02-1 | - |
| Grenzbiegespannung | mPa | 116 | 124 | 128 | 112 |
| Biege-E-Modul | mPa | 2.690 | 2.871 | 3.200 | 2.590 |
| Izod-Schlagzähigkeit | kJ/m² | 67 | 25 | 25 | |
| Vicat-Erweichungstemperatur VST B | °C | 206 | 208 | 208 | 202 |
| Wasseraufnahme (Sättigung) | % | 6,9 | | 67,1 | 10 |

Beispiel 3

Man erhitzt 7018 g ε-Caprolactam, 559 g ε-Aminocapronsäure und 2500 g Poly-(p-phenylensulfid) in einem Autoklaven unter Rühren in einer Stickstoffatmosphäre 30 min auf 275-278°C. Danach kühlt man auf 269°C ab und polymerisiert bei dieser Temperatur weitere 2 Stunden. Das Polyamid wird dann in bekannter Weise abgesponnen, in einem Wasserbad gekühlt und granuliert. Das Granulat wird viermal je drei Stunden

mit Wasser bei 90°C extrahiert und getrocknet.

Der Polyamidanteil dieser Mischung hat eine relative Viskosität von 3,3.

Die Eigenschaften der Produkte aus den Beispielen 1, 2 und 3 sind in der Tabelle 1 zusammengestellt.

Beispile 4

Man erhitzt 313 g Salz aus Adipinsäure und Hexamethylendiamin, 5,6 g Hexamethylendiamin (als Ausgleich für abdestilliertes Diamin) und 30 g Poly-(p-Phenylensulfid) unter Rühren in einer Stickstoffatmosphäre zunächst auf 240°C. Die erstarrte Schmelze wird auf 280°C erhitzt, wobei das Produkt wieder aufschmilzt. Die weitere Polykondensation erfolgt eine Stunde bei dieser Temperatur. Man erhält eine fast farblose Mischung mit einer relativen Viskosität von 2,8.

Die mechanischen Eigenschaften der Produkte gehen aus der folgenden Tabelle 2 hervor.

Tabelle 2

| | | Beispiel 4 | Polyamid 66 |
|---|---|---|---|
| Verteilung | | gleichmäßig | - |
| Teilchengröße | µm | 0,2 - 2,5 | - |
| Grenzbiegespannung | mPa | 129 | 125 |
| Biege-E-Modul | mPa | 3.005 | 2.800 |
| Izod-Schlagzähigkeit | $kJ/m^2$ | 41 | - |
| Vicat-Erweichungstemperatur VST B | °C | 243 | 245 |
| Wärmeformbeständigkeit | | | |
| ISO R 75 Meth. a | °C | 78 | 74 |
| ISO R 75 Meth. b | °C | 190 | 225 |

Beispiel 5

Man erhitzt 226 g Salz aus Adipinsäure und Hexamethylendiamin, 120,4 g Salz aus Terephthalsäure und Hexamethylendiamin, zusätzlich einem Überschuß von 6 g Hexamethylendiamin und 33,3 g Poly-(p-Phenylensulfid) zunächst 60 Minuten auf 250°C, wobei das Gemisch teilweise schmilzt, dann aber wieder fest wird, anschließend eine weitere Stunde auf 300°C. Man erhält ein fast farbloses Produkt mit einer Viskosität von 2,7 und folgenden Eigenschaften:

Tabelle 3

| | | Beispiel 5 | Polyamid 66/6T |
|---|---|---|---|
| Verteilung | | gleichmäßig | - |
| Teilchengröße | µm | 0,2 - 2,5 | - |
| Grenzbiegespannung | mPa | 122 | 124 |
| Biege-E-Modul | mPa | 2.580 | 2.510 |
| Izod-Schlagzähigkeit | $kJ/m^2$ | 30 | kein Bruch |
| Vicat-Erweichungstemperatur VST B | °C | 245 | 245 |
| Wärmeformbeständigkeit | | | |
| ISO R 75 Meth. a | °C | 79 | 77 |
| ISO R 75 Meth. b | °C | 191 | 185 |

Beispiel 6 (Vergleich)

Eine Granulatmischung aus 90 Teilen Polyamid 6 mit einer relativen Viskosität von 3,0 und 10 Teilen Poly-(p-phenylensulfid) wie in Beispiel 1, wird in einem Doppelwellenextruder vom Typ ZSK 32 der Firma Werner und Pfleiderer bei einer Massetemperatur von 280°C compoundiert. Die Umdrehungszahl beträgt 100 UpM, der Durchsatz 8 kg/Stunde. Der erhaltene Strang ist inhomogen, er enthält Stippen von ungelöstem Polyparaphenylensulfid.

Beispiel 7 (Vergleich)

Eine Granulatmischung aus 90 Teilen Polyamid 66 mit einer relativen Viskosität von 3,0 und 10 Teilen Poly-(p-phenylensulfid) aus Beispiel 4, wird in einem Doppelwellenextruder wie in Beispiel 6 compoundiert. Die Massetemperatur beträgt 275 bis 280°C. Das extrudierte Produkt ist nicht homogen, es enthält Stippen von nicht gelöstem Polyparaphenylensulfid.

Beispiel 8 (Vergleich)

90 Teile eines Copolyamids aus Adipinsäure, Terephthalsäure und Hexamethylendiamin mit 60 Gew.-% Polyamid 66-Anteil und einer relativen Viskosität von 3,1 und 10 Gewichtsteile Poly-(p-phenylensulfid) aus Beispiel 5 werden, wie in Beispiel 6 beschrieben, compoundiert. Abweichend hiervon beträgt die Massetemperatur 318°C.

Man erhält einen homogen aussehenden Strang mit einer ungleichmäßigen Verteilung des Polyparaphenylensulfids. Von Formkörpern aus diesem Produkt lassen sich an der Oberfläche dünne Häutchen abtrennen. Die Verteilung des Polyparaphenylensulfids im Inneren ist ungleichmäßig.

## Patentansprüche

1. Verfahren zur Herstellung von Mischungen aus Polyamiden und Polyarylensulfiden mit Teilchendurchmessern des kugelförmigen Polyarylensulfids von 0,01 bis 5 µm und einem Gehalt an Polyarylensulfid von 0,1 bis 40 Gew.-% durch Polymerisieren der polyamidbildenden Ausgangsstoffe unter Zusatz des Polyarylensulfids, das eine Schmelzviskosität von 10 bis 150 Pa·s, gemessen in einem Hochdruckkapillarviskosimeter bei 310°C und einer Schergeschwindigkeit von 1000 $s^{-1}$, aufweist.

2. Verfahren zur Herstellung von Mischungen aus Polyamiden und Polyarylensulfiden gemäß Anspruch 1,

dadurch gekennzeichnet, daß man das Polyarylensulfid zunächst in ε-Caprolactam löst und dann die Lösung hydrolytisch oder anionisch, gegebenenfalls unter Zusatz von Katalysator und/oder üblichen Zusatzstoffen polymerisiert.

**3.** Verfahren zur Herstellung von Mischungen aus Polyamiden und Polyarylensulfiden gemäß Ansprüchen 1 und 2, dadurch gekennzeichnet, daß man als Polyarylensulfid das Poly-(p-phenylensulfid) verwendet.

**4.** Verfahren zur Herstellung von Mischungen aus Polyamiden und Polyarylensulfiden gemäß Ansprüchen 1 und 2, dadurch gekennzeichnet, daß man eine Mischung aus ε-Caprolactam und Polyarylensulfid zu Beginn der hydrolytischen Polymerisation des Lactams auf 270 bis 290°C, vorzugsweise auf 275-280°C erhitzt und dann bei 260°C bis 270°C die Polymerisation zu Ende führt.

## Claims

**1.** A process for the production of mixtures of polyamides and polyarylene sulfides, in which the spherical polyarylene sulfide has particle diameters of 0.01 to 5 μm and which have a polyarylene sulfide content of 0.1 to 40% by weight, by polymerization of the polyamide-forming starting materials with addition of the polyarylene sulfide which has a melt viscosity of 10 to 150 Pa.s, as measured in a high-pressure capillary viscosimeter at 310°C and at a shear rate of 1000 $s^{-1}$.

**2.** A process for the production of mixtures of polyamides and polyarylene sulfides as claimed in claim 1, characterized in that the polyarylene sulfide is first dissolved in ε-caprolactam and the resulting solution is hydrolytically or anionically polymerized, optionally in the presence of a catalyst and/or typical additives.

**3.** A process for the production of mixtures of polyamides and polyarylene sulfides as claimed in claims 1 and 2, characterized in that poly-(p-phenylene sulfide) is used as the polyarylene sulfide.

**4.** A process for the production of mixtures of polyamides and polyarylene sulfides as claimed in claims 1 and 2, characterized in that a mixture of ε-caprolactam and polyarylene sulfide is heated to 270-290°C and preferably to 275-280°C at the beginning of the hydrolytic polymerization of the lactam and polymerization is then completed at 260 to 270°C.

## Revendications

**1.** Procédé de préparation de mélanges de polyamide et de sulfure de polyarylène avec des diamètres de particules du sulfure de polyarylène, de forme sphérique, de 0,01 à 5 μm et à une teneur en sulfure de polyarylène de 0,1 à 40 % en poids, par polymérisation des composants formant le polyamide avec adjonction du sulfure de polyarylène, ayant une viscosité à l'état fondu de 10 à 150 Pa.s, la mesure étant faite au viscosimètre capillaire sous haute pression à 310°C et à une vitesse de cisaillement de 1 000 $s^{-1}$.

**2.** Procédé de préparation de mélanges de polyamide et de sulfure de polyarylène selon revendication 1, caractérisé en ce que l'on dissout d'abord le sulfure de polyarylène dans l'ε-caprolactame puis on soumet la solution à polymérisation hydrolytique ou anionique, éventuellement avec adjonction de catalyseurs et/ou d'additifs usuels.

**3.** Procédé de préparation de mélanges de polyamide et de sulfure de polyarylène selon revendications 1 et 2, caractérisé en ce que le sulfure de polyarylène utilisé est un poly-(sulfure de p-phénylène).

**4.** Procédé de préparation de mélanges de polyamide et de sulfure de polyarylène selon revendications 1 et 2, caractérisé en ce que l'on chauffe un mélange d'ε-caprolactame et de sulfure de polyarylène, au début de la polymérisation hydrolytique du lactame, à une température de 270 à 290°C, de préférence de 275 à 280°C, puis on achève la polymérisation à une température de 260 à 270°C.